Europäisches Patentamt

European Patent Office

Office européen des brevets

(11) Numéro de publication: **0 333 963**
A1

(12) **DEMANDE DE BREVET EUROPEEN**

(21) Numéro de dépôt: **88402396.1**

(22) Date de dépôt: **23.09.88**

(51) Int. Cl.⁴: **F02P 7/02 , F02P 7/08 , H01R 39/60 , H02G 3/08 , H02G 3/06**

(30) Priorité: **23.03.88 FR 8803818**

(43) Date de publication de la demande:
**27.09.89 Bulletin 89/39**

(84) Etats contractants désignés:
**DE FR IT SE**

(71) Demandeur: **EQUIPEMENTS AUTOMOBILES MARCHAL**
**21-27, rue Gambetta**
**F-92130 Issy-les-Moulineaux(FR)**

(72) Inventeur: **Gerard, Jean-Claude**
**Rue de la Mairie**
**F-01120 Thin(FR)**

(74) Mandataire: **Gamonal, Didier**
**Société VALEO Service Propriété**
**Industrielle 30, rue Blanqui**
**F-93406 Saint Ouen(FR)**

(54) **Tête de distributeur d'allumage pour moteur à combustion interne.**

(57) La tête de distributeur d'allumage (1), pour moteur à combustion interne, est constituée d'une calotte amovible (2) de matériau isolant, présentant des cheminées (4,7) dans lesquelles pénètrent des câbles (44,47) d'alimentation et de distribution.

Selon l'invention, les câbles (44,47) et la calotte isolante (2) forment un ensemble indémontable et étanche par un manchon compressible (64,67) déformé par une pression axiale d'un bouchon (74,77) fixé au bout des cheminées (4,7).

FIG.3

## TETE DE DISTRIBUTEUR D'ALLUMAGE POUR MOTEUR A COMBUSTION INTERNE

La présente invention concerne une tête de distributeur d'allumage pour moteur à combustion interne, et notamment une tête intégrant un faisceau de câbles d alimentation et de distribution.

De telles têtes sont généralement constituées d'un corps creux amovible réalisé par moulage de matière isolante et présentant une pluralité de cheminées auxquelles sont raccordés des câbles, l'un d'alimentation et les autres de distribution.

L'extrémité libre du câble d'alimentation est connectée à la sortie haute-tension d'une bobine d'allumage tandis que l'autre extrémité, qui est intégrée à la tête, est connectée à un plot d'alimentation par l'intermédiaire d'un conducteur de courant noyé dans ledit corps creux isolant. Le plot d'alimentation se présente sous la forme d'une douille débouchant sur la paroi supérieure du corps creux, et dans laquelle est logé un frotteur en contact sur une languette conductrice solidaire d'un doigt rotatif du distributeur sur lequel se fixe la tête.

Les extrémités libres des câbles de distribution sont connectées aux bougies d'allumage du moteur à combustion interne, tandis que leurs autres extrémités, intégrées au corps creux, sont connectées, par l'intermédiaire de conducteurs de courant noyés dans ledit corps creux isolant, à des plots de distribution faisant saillie sur la périphérie interne du corps creux isolant, permettant d'établir un contact électrique entre le plot d'alimentation et successivement chacun des plots de distribution lors de la rotation du doigt de distribution grâce à la languette conductrice défilant devant chacun desdits plots de distribution.

Un tel système, notamment connu par le brevet français n° 832.124, donne une garantie effective contre une déconnexion accidentelle due à une fausse manoeuvre lors d'une intervention sur le moteur où même due aux vibrations provoquées par une route en mauvais état, une telle déconnexion ayant pour effet de provoquer des ratés d'allumage dans le circuit d'allumage et, dans le cas où celui-ci possède un système anti-pollution composé d'un catalyseur, la destruction instantanée de celui-ci, il n'en reste pas moins que les liaisons difficilement étanches des plots conducteurs aux câbles haute-tension sont soumises à l'humidité ambiante.

La présente invention propose de remédier à cet inconvénient en mettant en oeuvre une tête de distributeur constituée de câbles et d'une calotte isolante formant un ensemble indémontable et étanche.

A cet effet, elle concerne une tête de distributeur d allumage de moteur à combustion interne, constituée d'un corps creux de matériau isolant, présentant des cheminées dans lesquelles pénètrent des câbles d'alimentation et de distribution connectés pour l'une de leurs extrémités, respectivement à des éléments conducteurs électriques qui se terminent sur la face interne du corps creux par des plots de distribution établissant successivement une liaison électrique avec un doigt de distribution, et pour l'autre de leurs extrémités respectivement à des bougies d'allumage et à une sortie haute tension d'une bobine d'allumage, caractérisée en ce que les câbles sont intégrés au corps creux de la tête par des moyens de verrouillage effectifs normalement indémontables et des moyens d'étanchéité et de résistance au cheminement haute-tension constitués par un manchon compressible déformé par une pression axiale d'un organe de poussée fixé en bout des cheminées.

La description suivante donne, à titre d'exemple, deux modes de réalisation de l'invention en regard des dessins annexés, selon lesquels :

- La figure 1 représente, une tête de distributeur d'allumage avant intégration du faisceau de câbles selon un premier mode de réalisation de l'invention, suivant une coupe longitudinale passant par l'axe d'un conducteur de distribution.

- La figure 2 représente, une tête de distributeur d'allumage après intégration du faisceau de câbles selon le premier mode de réalisation de l'invention, suivant une coupe longitudinale passant par l'axe du conducteur d'alimentation.

- La figure 3 représente, une tête de distributeur d'allumage selon la figure 2, mais suivant une coupe longitudinale passant par l'axe d'un conducteur de distribution.

- La figure 4 représente, une tête de distributeur d'allumage selon un deuxième mode de réalisation de l'invention, suivant une coupe transversale passant par l'axe d'un conducteur de distribution.

- La figure 5 représente la tête de distributeur d'allumage, selon la figure 4 mais selon un axe passant par l'axe du conducteur d'alimentation.

- La figure 6 représente une tête de distributeur d'allumage, en vue de face, selon le deuxième mode de réalisation de l'invention représenté aux figures 4 et 5.

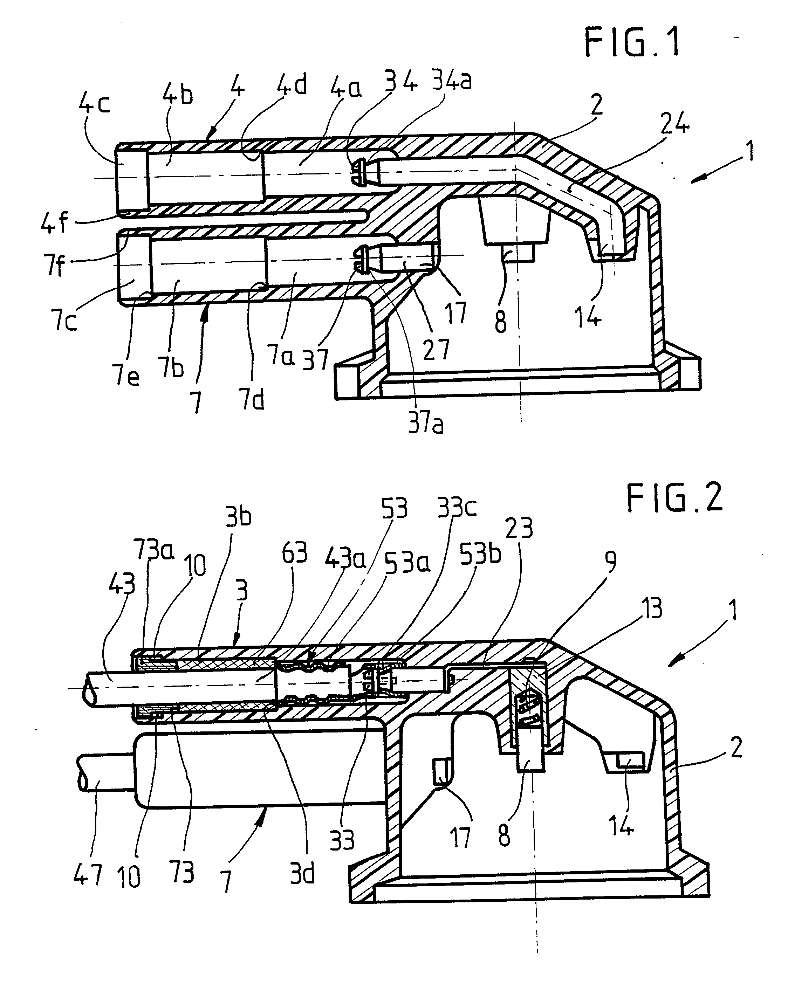

Selon un premier mode de réalisation de l'invention représenté aux figures 1 à 3, une tête de distributeur d'allumage 1 est constituée d'un corps creux 2, réalisée par moulage de matière isolante, qui présente une pluralité de cheminées 3 à 7 s'étendant parallèlement entre elles, les unes a côté ou/et au-dessus des autres. Le corps creux isolant 2 est prévu pour coiffer un corps de distributeur (non représenté) sur lequel il se fixe.

Une pluralité de plots de distribution 14 à 17 débouchent sur la paroi interne du corps creux isolant 2 et s'inscrivent, avec un même écart angulaire, les uns par rapport aux autres, sur un cercle. Chacun des plots de distribution 14 à 17 se prolonge par un élément conducteur électrique 24 à 27 logé dans le corps creux isolant 2 lors de son moulage, lesquels conducteurs électriques se terminent au fond des cheminées 4 à 7 par des broches métalliques 34 à 37 (figure 1).

Un plot d'alimentation 13 débouche sur la paroi interne supérieure du corps creux isolant 2 et dans l'axe du cercle sur lequel s'inscrivent les plots de distribution 14 à 17. Le plot d'alimentation 13 se présente sous la forme d'une douille dans laquelle est disposé un frotteur 8 et un ressort de pression 9. Le plot d'alimentation 13 se prolonge par un élément conducteur électrique 23 noyé dans le corps creux isolant 2 lors de son moulage, et se termine au fond de la cheminée 3 par une broche métallique 33.

Les broches métalliques 33 à 37 présentent à leurs extrémités débouchant au fond des cheminées 3 à 7, un décrochement 33a à 37a.

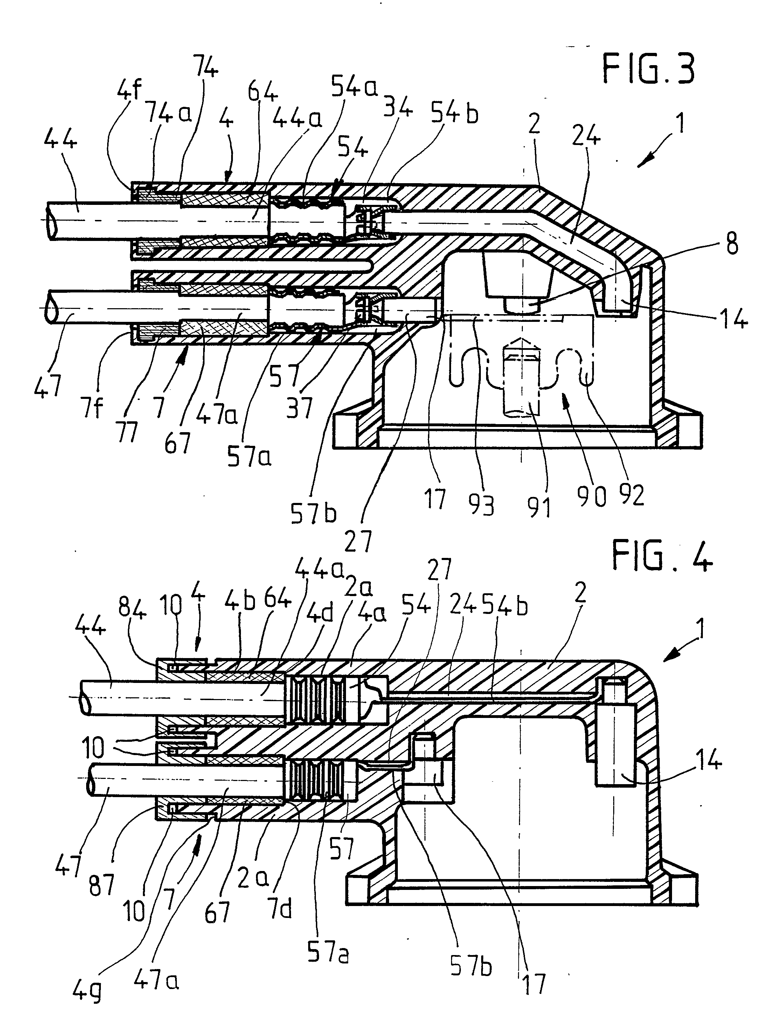

Selon la figure 2, chacune des broches métalliques 33 à 37 faisant saillie à l'intérieur des cheminées 3 à 7 est connectée à un câble respectivement 43 à 47. Les connexions sont réalisées grâce à des embouts conducteurs 53 à 57 constitués chacun d'une bague élastique fendue 53a à 57a, et d'une partie tubulaire 53b à 57b. Les bagues élastiques fendues 53a à 57a maintiennent l'extrémité des câbles 3 à 7 et établissent un contact électrique, tandis que la partie tubulaire 53b à 57b possède des languettes 53c à 57c qui s'ancrent dans le décrochement 33a à 37a des broches métalliques 33 à 37 afin d'effectuer un verrouillage effectif. L'extrémité libre du câble 43 est connectée à la sortie haute tension d'une bobine d'allumage faisant partie du circuit d'allumage du véhicule qui transmet des impulsions d'allumage au plot d'alimentation 13. Un doigt de distribution rotatif 90 (figure 3) est monté sur un un arbre 91 entraîné directement en rotation par le moteur à combustion interne. Le doigt de distribution (90) est constitué d'un support isolant 92 portant une languette conductrice 93 qui reçoit les impulsions d'allumage produites par la bobine d'allumage grâce au frotteur 8 qui est maintenu en appui par le ressort de pression 9 sur la languette conductrice 93. La languette conductrice 93, entraînée en rotation par le doigt 90 qui la porte, établit successivement un contact électrique avec les plots de distribution 14 à 17 grace à un arc électrique qui se forme à chacun des passages de la languette conductrice 93 au regard des plots de distribution 14 à 17.

Chacun des plots de distribution 14 à 17 reliés aux broches métalliques 34 à 37, est connecté à une bougie d'allumage par l'intermédiaire des câbles 44 à 47.

Chacune des extrémités 43a à 47a des câbles 43 à 47 provenant, d'une part, de la sortie haute-tension de la bobine d'allumage et, d'autre part, des bougies d'allumage est intégrée à la tête de distributeur d'allumage 1 comme précédemment expliqué, et de plus comporte des moyens d'étanchéité.

Pour ce faire, un bouchon tubulaire 73 à 77 et un manchon compressible 63 à 67 sont enfilés sur les câbles 43 à 47 sur les extrémités lesquels sont disposés les embouts conducteurs 53 à 57, proches desdits bouchons (73 à 77) et manchons (63 à 67).

Les cavités internes des cheminées 3 à 7, au fond desquelles font faillie les broches métalliques 33 à 37 sont divisées en trois parties 3a à 7a, 3b à 7b, 3c à 7c, chacune d'un diamètre différent.

Les manchons compressibles 63 à 67 sont d'un diamètre externe sensiblement égal au diamètre des parties 3b à 7b et d'une longueur inférieure à ces parties 3b à 7b, et les bouchons 73 à 77 d'un diamètre au plus égal au diamètre desdites parties 3b à 7b, présentent chacun une collerette 73a à 77a dont le diamètre est supérieur au diamètre des parties 3b à 7b et inférieur au diamètre des parties 3c à 7c.

Lors ou après insertion des câbles 43 à 47 dans les cheminées 3 à 7 pour connecter les embouts 53 à 57 sur les broches métalliques 33 à 37, les manchons compressibles 63 à 67 et les bouchons 73 à 77 sont insérés dans les parties 3b à 7b des cavités des cheminées 3 à 7 jusqu'à ce que les manchons compressibles 63 à 67 viennent en butée sur les épaulements 3d à 7d délimitant les parties 3a à 7a et 3b à 7b. Il est à noter que la longueur des manchons compressibles 63 à 67 et des bouchons 73 à 77 est telle à laisser subsister un jeu 10 entre les collerettes 73a à 77a des bouchons 73 à 77 et les épaulements 3e à 7e délimitant les parties 3b à 7b et 3c à 7c et constituant des butées axiales circulaires aux bouchons 73 à 77.

Pour que les câbles 43 à 47 et le corps creux isolant 2 forment un ensemble étanche, les bouchons 73 à 77 sont translatés à l'intérieur des cheminées 3 à 7 de manière à ce qu'ils procurent une pression axiale sur les manchons compressibles 63 à 67 qui, de ce fait, se ressèrent sur les extrémités 43a à 47a des câbles 43 à 47.

La déformation des manchons compressibles 63 à 67 a pour effet de comprimer les extrémités 43a à 47a des câbles 43 à 47, et à moindre échelle les parois cylindriques 3b à 7b des cheminées 3 à 7, qui, de ce fait, forment une étanchéité.

La déformation des manchons compressibles 63 à 67, provoquée par la pression axiale due à la translation des bouchons 73 à 77, est limitée par les collerettes 73a à 77a qui viennent en butée sur les épaulements 3e à 7e délimitant les parties 3b à 7b et 3c à 7c rattrapant les jeux 10. Les extrémités 3f à 7f des parois des cheminées 3 à 7 sont ensuite serties sur la collerette 73a à 77a des bouchons 73 à 77, maintenant la pression axiale sur les manchons déformables 63 à 67 qui permet aux câbles 43 à 47 et à la calotte isolante 2 de former un ensemble normalement indémontable et étanche (figure 3).

Aux figures 4 à 6 est représenté un second mode de réalisation de l'invention, selon lequel une tête de distributeur d'allumage 1 est constituée d'un corps creux 2 réalisé par moulage de matière plastique, et présente un bloc 2a réunissant des cheminées 3 à 7. Le corps creux 2 obtenu par moulage, présente sur sa paroi interne des cavités aptes à recevoir par la suite, des plots de distribution 14 à 17 et un plot d'alimentation 13. Des passages 23 à 27 sont également ménagés entre les cheminées 3 à 7 et les cavités aptes à recevoir respectivement le plot d'alimentation 13 et les plots de distribution 14 à 17.

Les câbles d'alimentation 43 et de distribution 44 à 47 sont munis d'embouts conducteurs 53 à 57 constitués d'une bague fendue élastique 53a à 57a apte à sertir l'extrémité du câble 43 à 47 qui l'équipe, et établit également un contact électrique. L'autre partie 53b à 57b des embouts conducteurs 53 à 57 se présente sous la forme d'un conducteur apte à se glisser dans les passages 23 à 27 lors de l'insertion des câbles 3 à 7 et embouts conducteurs 53 à 57. Lorsque ceux-ci sont en place, l'extrémité des conducteurs 53b à 57b débouche dans les cavités prévues pour recevoir le plot de distribution 13 et les plots d'alimentation 14 à 17. Les plots 13 à 17 sont alors insérés à force à leur place respective, ce qui déforme l'extrémité des conducteurs 53b à 57b réalisant ainsi un verrouillage effectif.

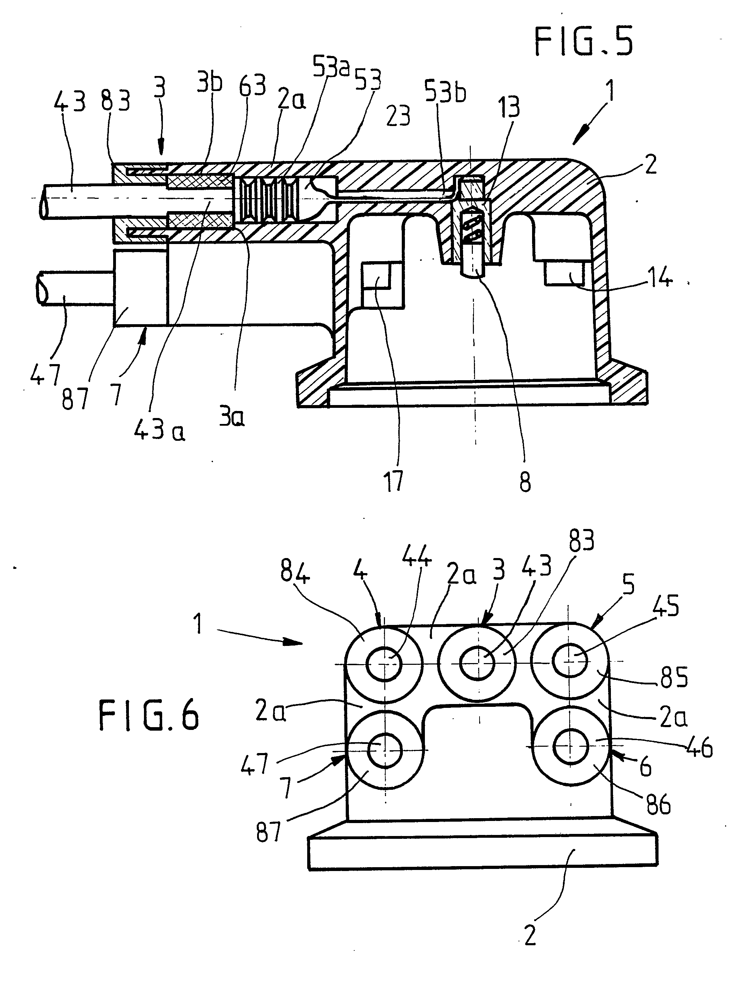

Un manchon déformable 63 à 67 et un chapeau 83 à 87 sont enfilés sur chacun des câbles 43 à 47 et sont translatés à l'intérieur des cheminées 3 à 7 en les poussant à l'aide de chapeaux 83 à 84 qui présentent une gorge circulaire apte à se loger sur l'extrémité des parois des cheminées 3 à 7. Les manchons déformables 63 à 67 sont insérés dans les cheminées 3 à 7 jusqu'à ce que, comme dans le précédent exemple de réalisation, ils viennent en contact sur les épaulements 3d à 7d délimitant les parties 3a à 7a et 3b à 7b. Comme dans l'exemple précédent, les manchons déformables 63 à 67 et les chapeaux 83 à 87 sont dimensionnés de manière telle à ce qu'un jeu 10 subsiste entre la paroi frontale d'extrémité des cheminées 3 à 7 et le fond de la gorge circulaire ménagée dans les chapeaux 83 à 87 (figure 4). Ensuite, les chapeaux 83 à 87 sont translatés axialement jusqu'à ce qu'ils viennent en butée sur les épaulements 4g à 7g, provoquant une pression axiale sur les manchons déformables, jusqu'à ce que le jeu 10 soit rattrapé, ce qui a pour effet de comprimer l'extrémité 43a à 47a des câbles 43 à 47 et les parois cylindriques 3b à 7b des cheminées 3 à 7 en les serrant, formant ainsi un ensemble étanche et normalement indémontable, après soudage des chapeaux 83 à 87 sur l'extrémité des cheminées 3 à 7 (figure 5), par exemple par soudage par ultra-sons.

Il est à noter que l'on obtient ainsi un ensemble normalement indémontable, c'est-à-dire un ensemble prévu pour ne pas être démonté et résistant à un effort de traction normal, c'est-à-dire par exemple, d'au moins cinq kilogrammes.

## Revendications

1) Tête de distributeur d'allumage de moteur à combustion interne, constituée d'un corps creux (2) de matériau isolant, présentant des cheminées (3 à 7) dans lesquelles pénètrent des câbles d'alimentation (43) et de distribution (44 à 47) connectés pour l'une de leurs extrémités, respectivement à des éléments conducteurs électriques (23 à 27) qui se terminent sur la face interne d'un corps creux (2) par des plots de distribution (14 à 17) établissant successivement une liaison électrique avec un doigt de distribution (90), et pour l'autre de leurs extrémités respectivement à des bougies d'allumage et à une sortie haute-tension d'une bobine d'allumage, caractérisée en ce que les câbles (43 à 47) sont intégrés au corps creux (2) de la tête (1) par des moyens de verrouillage effectifs normalement indémontables et des moyens d'étanchéité et de résistance au cheminement haute-tension constitués par un manchon compressible (63 à 67), déformé par une pression axiale d'un organe de poussée (73 à 77, ou, 83 ou 87) fixé en bout des cheminées (3 à 7).

2) Tête de distributeur d'allumage, selon la revendication 1, caractérisée en ce que l'organe de poussée est constitué d'un bouchon (73 à 77), enfilé sur le câble (43 à 47) et pénétrant dans la cheminée (3 à 7).

3) Tête de distributeur d'allumage, selon la revendication 1, caractérisée en ce que l'organe de poussée est constitué d'un chapeau (83 à 87), enfilé sur le câble (43 à 47) et coiffant l'extrémité de la cheminée (3 à 7).

4) Tête de distributeur d'allumage, selon l'une des revendications 2 ou 3, caractérisée en ce qu'une butée axiale circulaire (3e à 7e) de l'organe de poussée (73 à 77, ou, 83 à 87) est ménagée sur la paroi des cheminées (3 à 7).

5) Tête de distributeur d'allumage, selon la revendication 2, caractérisée en ce que le bouchon (73 à 77) est fixé dans la cheminée (3 à 7) par sertissage de la paroi d'extrémité (3f à 7f) de ladite cheminée (3 à 7) sur ledit bouchon (73 à 77).

6) Tête de distributeur d'allumage, selon la revendication 3, caractérisée en ce que le chapeau (83 à 87) est fixé sur l'extrémité de la cheminée (3 à 7) par soudage.

7) Tête de distributeur d'allumage, selon la revendication 1, caractérisée en ce que les moyens de verrouillage effectifs sont réalisés par encliquetage des embouts conducteurs (53 à 57) sertis sur les cables (3 à 7), sur des broches métalliques (23 à 27).

8) Tête de distributeur d'allumage, selon la revendication 1, caractérisée en ce que les moyens de verrouillage effectifs sont réalisés par déformation des embouts conducteurs (53 à 57) lors de l'insertion des plots (13 à 17) dans des cavités du corps creux (2) prévues à cet effet.

9) Tête de distributeur d'allumage, selon l'une des revendications 1, 7 ou 8, caractérisée en ce que les moyens de verrouillage sont effectifs à un effort de traction d'au moins cinq kilogrammes.

FIG.1

FIG.2

FIG.3

FIG. 4

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | PATENT ABSTRACTS OF JAPAN, vol. 9, no. 275 (M-426)[1998], 2 novembre 1985; & JP-A-60 119 376 (NIPPON DENSO K.K.) 26-06-1985 * Résumé * --- | 1-4,6 | F 02 P 7/02<br>F 02 P 7/08<br>H 01 R 39/60<br>H 02 G 3/08<br>H 02 G 3/06 |
| X | GB-A-2 154 076 (TOKAI ELECTRIC WIRE CO. LTD) * Figures 7-12; page 1, ligne 111 - page 3, ligne 40 * --- | 1-4,6 | |
| X | US-A-4 437 719 (Y. MIYAMOTO) * Colonne 1, lignes 13-57; colonne 2, ligne 37 - colonne 3, ligne 27 * | 1,3 | |
| A | --- | 2,4 | |
| A | CH-A- 336 107 (AGRO A. GROSSAUER FABRIKATION UND ENGROS-HANDEL ELEKTR. ARTIKEL) * Figures 1-3; page 1, lignes 35-56 * --- | 1-3 | |
| A | FR-A-2 034 150 (M.A. WEBSTER) * Figures 1,2,5; page 4, ligne 22 - page 5, ligne 10; page 6, ligne 29 - page 7, ligne 12 * --- | 1 | **DOMAINES TECHNIQUES RECHERCHES (Int. Cl.4)**<br><br>F 02 P<br>H 01 R<br>H 02 G |
| A | EP-A-0 176 213 (GENERAL MOTORS CORP.) --- | | |
| A. | FR-A- 707 440 (ROBERT BOSCH AG) --- | | |
| A | FR-A-2 058 889 (JOSEPH LUCAS (INDUSTRIES) LTD) ----- | | |

Le présent rapport a été établi pour toutes les revendications

| Lieu de la recherche | Date d'achèvement de la recherche | Examinateur |
|---|---|---|
| LA HAYE | 02-06-1989 | LEROY C.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................

& : membre de la même famille, document correspondant

EPO FORM 1503 03.82 (P0402)